(19) Europäisches Patentamt
European Patent Office
Office européen des brevets

(11) Veröffentlichungsnummer: **0 342 493**
**A2**

# (12) EUROPÄISCHE PATENTANMELDUNG

(21) Anmeldenummer: **89108370.1**

(22) Anmeldetag: **10.05.89**

(51) Int. Cl.4: **C08F 246/00 , C08F 230/04 , C09D 3/74**

(30) Priorität: **19.05.88 DE 3817069**

(43) Veröffentlichungstag der Anmeldung: **23.11.89 Patentblatt 89/47**

(84) Benannte Vertragsstaaten: **AT BE CH DE ES FR GB IT LI NL SE**

(71) Anmelder: **BASF Aktiengesellschaft**
**Carl-Bosch-Strasse 38**
**D-6700 Ludwigshafen(DE)**

(72) Erfinder: **Bott, Kaspar, Dr.**
**Werderstrasse 57**
**D-6800 Mannheim 1(DE)**
Erfinder: **Ley, Gregor, Dr.**
**In den Trankstuecken**
**D-6719 Wattenheim(DE)**
Erfinder: **Wistuba, Eckehardt, Dr.**
**Im Obergarten 7**
**D-6702 Bad Duerkheim(DE)**

## (54) Zinnhaltige Copolymerisate und deren Verwendung.

(57) 0,03 bis 2 Gew.-% Zinn in Form von Einheiten polymerisierbarer Organozinnverbindungen enthaltende Copolymerisate in Form wäßriger Dispersionen mit einer Glastemperatur von -40 bis +50 °C und deren Verwendung als biozide Bindemittel für Holzschutzlasuren, Dispersionsfarben und kunstharzgebundene Putze.

EP 0 342 493 A2

## Zinnhaltige Copolymerisate und deren Verwendung

Die vorliegende Erfindung betrifft Copolymerisate, die Zinn in organischer Bindung enthalten, in Form wäßriger Dispersionen und deren Verwendung als biozide Bindemittel für Holzschutzlasuren, Dispersionsfarben und kunstharzgebundene Putze.

Organisch gebundenes Zinn enthaltende Polymerisate sind als Bindemittel für sogenannte "Antifouling"-Farben bekannt, also für Farben, die dem Schutz von Bootskörpern, Bojen und anderen mit Meerwasser in Berührung kommenden Teilen gegen Bewuchs durch schleimbildende Bakterien, Algen, Muscheln und andere Meereslebewesen dienen. Es hat sich herausgestellt, daß derartige Polymerisate, um für diesen Zweck geeignet zu sein, zwei Bedingungen erfüllen müssen: 1) Sie müssen erhebliche Mengen an organisch gebundenem Zinn einpolymerisiert enthalten oder als Alternative mit Zinn oder andere toxische Komponenten enthaltenden, im Meerwasser löslichen Stoffen vermischt sein und 2) sie müssen bei Berührung mit Meerwasser in kontrollierbarer Weise langsam hydrolysieren und in Lösung gehen, um ihre biozide Wirkung entfalten zu können (s. M.H. Gitlitz, Journal of Coatings Technology, 53 (1981), Nr. 678, 46-52, insbes. 50; US-Patente 4 021 392 und 4 532 269; GB-Anmeldung 20 87 415; EP-Anmeldung 151 809).

Auch bei Holzschutzlasuren, Dispersionsfarben und kunstharzgebundenen Putzen wird eine biozide Wirksamkeit angestrebt. Das erreichte man bislang durch Einmischen biozid wirksamer Substanzen in die genannten Produkte. Man erhält auf diese Weise zwar befriedigende Effekte, jedoch ergeben sich ökologische Probleme, da die bioziden Wirkstoffe als solche in der Regel gesundheitsschädlich sind und daher nur unter Einhaltung entsprechender Vorsichtsmaßnahmen in die Produkte eingebracht werden können und da sie nach der Verarbeitung der Produkte aus deren Schichten wieder auswandern können. Auch der Versuch, die für Antifouling-Farben bewährten zinnhaltigen Polymerisate für Holzschutzlasuren, Dispersionsfarben und kunstharzgebundene Putze einzusetzen, führt nicht zu befriedigenden Ergebnissen, da sie durch die leichte Hydrolysierbarkeit und den hohen Zinngehalt toxikologisch bedenklich sind und vielfach nicht genügend beständige Überzüge ergeben.

Es wurden nun zinnhaltige Copolymerisate in Form wäßriger Dispersionen gefunden, die bei ihrer Verwendung als biozide Bindemittel für Holzschutzlasuren, Dispersionsfarben und kunstharzgebundene Putze die geschilderten Nachteile nicht haben und trotz sehr niedrigen Gehaltes an organisch gebundenem Zinn und hoher Hydrolysenbeständigkeit eine sehr gute biozide Wirkung, die sich insbesondere in ausgeprägter Bewuchshemmung gegenüber Pilzen, Algen, Flechten, Moosen u. dgl. äußert, entfalten. Dennoch sind sie selbst gegenüber empfindlichen Fischen, wie der Regenbogenforelle, nicht als toxisch einzustufen.

Die erfindungsgemäßen Copolymerisate liegen in wäßriger Dispersion vor; sie enthalten, bezogen auf wasserfreies Polymerisat,

(a) 0,03 bis 2 Gew.-% Zinn in Form von Einheiten von Organozinnverbindungen mit mindestens einer polymerisierbaren C = C-Bindung,

(b) 10 bis 80 Gew.-% Einheiten hartmachender Monomerer,

(c) 90 bis 20 Gew.-% Einheiten weichmachender Monomerer,

(d) 0 bis 5 Gew.-% Einheiten von Acrylsäure, Methacrylsäure, Vinylsulfonsäure, Maleinsäure, Acrylamid, Methacrylamid oder am N durch $C_1$- bis $C_8$-Alkyl, Hydroximethyl oder $C_1$- bis $C_8$-Alkoximethyl substituiertem Acryl- oder Methacrylamid und

(e) 0 bis 5 Gew.-% anderer Monomerer, die weder hydrophilierend noch leicht hydrolysierbar sind,

und sie haben eine Glastemperatur von -40 bis +50 °C, vorzugsweise von -20 bis +30 °C.

Als Organozinnverbindungen, die in die erfindungsgemäßen Polymerisate eingebaut sind, kommen grundsätzlich alle diejenigen in Betracht, die wenigstens eine polymerisierbare C = C-Bindung, vorzugsweise eine bis zwei solcher Bindungen enthalten. Wegen ihrer leichten Zugänglichkeit sind Organozinnverbindungen mit einem oder zwei Acrylsäure-, Methacrylsäure-, Maleinsäure-, Itaconsäure- oder Allylresten bevorzugt. Von besonderem Interesse sind die Stoffe der allgemeinen Formeln

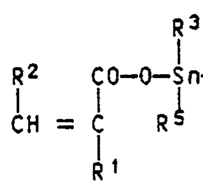 (I) und 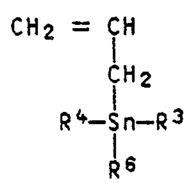 (II),

in denen

$R^1$ Wasserstoff oder eine Gruppe der Formel $-CH_2-X$,

$R^2$ eine Gruppe der Formel -X,

X Wasserstoff oder ein Rest der Formel -CO-O-A (wobei bei Anwesenheit zweier Reste X wenigstens einer Wasserstoff ist),

A Wasserstoff, eine $C_1$- bis $C_8$-Alkylgruppe oder eine Gruppe der Formel

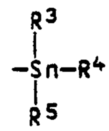 ,

$R^3$ und $R^4$ gleiche oder verschiedene $C_1$- bis $C_8$-Alkylgruppen, Cycloalkylgruppen oder Phenylgruppen,

$R^5$ Gruppen der bei $R^3$ und $R^4$ genannten Art oder eine Gruppe der Formel

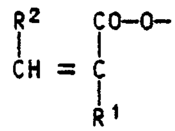 ,

und

$R^6$ eine Gruppe der bei $R^3$ und $R^4$ genannten Art oder eine Allylgruppe bedeuten.

Die Organozinnverbindungen der genannten Formeln sind bekannt oder nach bekannten Verfahren erhältlich. Als Beispiele für solche Verbindungen seien genannt: Tri-n-butylzinn-acrylat, Tri-n-butylzinn-methacrylat, Tri-cyclohexylzinn-methacrylat, Tri-cyclohexylzinn-acrylat, Tri-phenylzinn-acrylat, Triphenylzinn-methacrylat, Tri-n-propylzinn-acrylat, Tri-n-propylzinnmethacrylat, Tri-isopropylzinn-acrylat, Tri-isopropylzinn-methacrylat, Tri-sec.-butylzinn-acrylat, Tri-sec.-butylzinn-methacrylat, Tri-ethylzinn-acrylat, Tri-ethylzinnmethacrylat, Diethyl-butylzinn-acrylat, Diethyl-butylzinn-methacrylat, Diethylamylzinn-acrylat, Diethylamylzinnmethacrylat, Diamyl-methylzinn-acrylat, Diamyl-methylzinn-methacrylat, Propyl-butyl-amylzinn-acrylat, Propyl-butyl-amylzinn-methacrylat, Diethyl-phenylzinn-acrylat, Diethyl-phenylzinn-methacrylat, Ethyl-diphenylzinn-acrylat, Ethyl-diphenylzinn-methacrylat, n-Octyl-diphenylzinnacrylat, n-Octyl-diphenylzinn-methacrylat, Diethyl-octylzinn-acrylat, Diethyl-octylzinnmethacrylat, Di-n-butylzinn-diacrylat, Di-n-butylzinn-dimethacrylat, Maleinsäure-(tripropylzinn)-mono- und -diester, Maleinsäure-(tricyclohexylzinn)-mono- und -diester, Maleinsäure-(triphenylzinn)-mono- und -diester, Maleinsäure-(tri-n-butylzinn)-mono- und -diester sowie die entsprechenden Mono-und Diester der Itacon- und Citraconsäure, Allyl-tri-n-butylzinn, Diallyl-di-n-butylzinn, Allyltricyclohexylzinn, Diallyl-dicyclohexylzinn, Allyl-triphenylzinn, Diallyl-diphenylzinn. Wegen ihrer besonders guten Wirksamkeit sind von den Stoffen der Formeln (I) und (II) diejenigen bevorzugt, deren Reste $R^3$, $R^4$, $R^5$ und $R^6$ $C_3$- bis $C_6$-Alkylgruppen, Phenylgruppen oder Cyclohexylgruppen sind, wobei diejenigen, deren Reste $R^3$, $R^4$ und $R^5$ bzw. $R^3$, $R^4$ und $R^6$ gleich sind, den Vorteil besonders leichter Zugänglichkeit haben und daher vorzugsweise in Betracht kommen.

Die Organozinnverbindungen (a) sind mit ihrer oder ihren C=C-Doppelbindungen in die Polymerisate der erfindungsgemäßen Dispersionen in solcher Menge einpolymerisiert, daß der Gehalt der Polymerisate 0,03 bis 2 Gew.-%, vorzugsweise 0,3 bis 1,5 Gew.-% an Zinn beträgt.

Die Polymerisate der Erfindung enthalten außerdem hartmachende und weichmachende Monomere einpolymerisiert. Die Ausdrücke "hartmachend" bzw. "weichmachend" bezeichnen solche Monomere, die in der Literatur gelegentlich ungenau als "hart" bzw. "weich" angegeben werden, d.h. solche Monomere, die für sich polymerisiert harte bzw. weichere Homopolymere ergeben. In diesem Sinne versteht man im allgemeinen unter hartmachenden Monomeren solche, deren Homopolymerisate Glastemperaturen von etwa 25 bis 120 °C, unter weichmachenden Monomeren solche, deren Homopolymerisate Glastemperaturen von etwa -60 bis +25 °C haben. Zwar gibt es bekanntermaßen fließende Übergänge zwischen diesen Monomerengruppen, doch sind für beide typische Vertreter bekannt.

Typische hartmachende Monomere (b) sind z.B. Styrol, Methylmethacrylat, tert.-Butylacrylat, Acrylnitril, Vinylacetat, Vinylidenchlorid und Vinylchlorid. Von diesen werden im Rahmen der vorliegenden Erfindung Methylmethacrylat und Styrol bevorzugt.

Typische weichmachende Monomere (c) sind z.B. Acryl- und Methacrylsäureester von 2 bis 8 Kohlenstoffatome enthaltenden, nichttertiären Alkanolen, Butadien und Vinylpropionat. Von diesen werden im Rahmen der vorliegenden Erfindung Acryl- und Methacrylsäureester von 2 bis 8 Kohlenstoffatome

enthaltenden nichttertiären Alkanolen bevorzugt.

Außer den genannten Monomerengruppen können die Polymerisate der Erfindung in untergeordneter Menge, nämlich bis zu 7 Gew.-%, vorzugsweise bis zu 3,5 Gew.-%, Monomere aus der folgenden Gruppe (d) einpolymerisiert enthalten: Acrylsäure, Methacrylsäure, Vinylsulfonsäure, Maleinsäure (diese Säuren in freier Form oder in Form ihrer Salze, insbesondere der Alkali-und Ammoniumsalze), Acrylamid, Methacrylamid und deren am Stickstoffatom durch $C_1$- bis $C_8$-Alkyl, Hydroximethyl oder $C_1$- bis $C_8$-Alkoxymethyl substituierte Derivate, wie N-Methylacrylamid, N-Isobutylacrylamid, N-Ethoxi- oder N-Butoximethylacrylamid und Hydroxialkylacrylate und -methacrylate, wie Hydroxiethylacrylat, 2-Hydroxi- und 3-Hydroxipropylacrylat.

Schließlich können die erfindungsgemäßen Polymerisate bis zu 5 Gew.-% anderer Monomerer (e) enthalten unter der Voraussetzung, daß diese weder hydrophilierend noch leicht hydrolisierbar sind, da sie sonst die positiven Eigenschaften der Polymerisate beeinträchtigen könnten. Unter diesen Monomeren der Gruppe (e) sind besonders solche hervorzuheben, die in der Lage sind, durch chemische Reaktionen eine Vernetzung der Polymerisate zu bewirken, beispielsweise Epoxigruppen enthaltende Monomere, wie Glycidylacrylat und Glycidylmethacrylat. Weitere interessante Monomere der Gruppe (e) sind solche, die Carbonylgruppen aufweisen. Carbonylgruppen aufweisende Monomere im Sinne der Erfindung sind nicht z.B. Ester, wie Ethylacrylat oder Vinylacetat oder Amide, wie Acrylamid oder Carbonsäuren, wie Acrylsäure, sondern Monomere mit mindestens einer Aldo- oder Keto-Gruppe und einer polymerisierbaren Doppelbindung. Von besonderem Interesse sind Acrolein, Diacetonacrylamid, Formylstyrol, Vinylalkylketone mit vorzugsweise 4 bis 7 C-Atomen, wie besonders Vinylmethylketon, Vinylethylketon und Vinylisobutylketon und/oder (Meth)acryloxy-alkylpropanale der allgemeinen Formel (III)

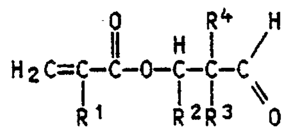 (III),

in der $R^1$ für -H oder -$CH_3$, $R^2$ für -H oder einen 1 bis 3 C-Atome enthaltenden Alkylrest, $R^3$ für einen 1 bis 3 C-Atome enthaltenden Alkylrest und $R^4$ für einen 1 bis 4 C-Atome enthaltenden Alkylrest stehen. Derartige (Meth)acryloxyalkylpropanale können nach dem Verfahren der deutschen Patentanmeldung P 27 22 097.9 durch Veresterung von ß-Hydroxyalkylpropanalen der allgemeinen Formel (IV)

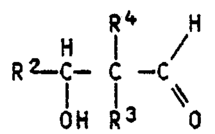 (IV),

in der $R^2$, $R^3$ und $R^4$ die für die allgemeine Formel (III) angegebene Bedeutung haben, in Gegenwart von indifferenten Verdünnungsmitteln sowie geringen Mengen Sulfonsäuren und Mineralsäuren bei Temperaturen von 40 bis 120, insbesondere von 60 bis 90 °C hergestellt sein. Als Ketogruppen tragende Monomere kommen ferner Diacetonacrylat, Acetonylacrylat, Diaceton(meth)acrylat, Diacetonacrylamid, Diacetonmethacrylamid, 2-Hydroxypropylacrylatacetylacetat und Butandiol-1,4-acrylatacetylacetat in Frage. Die Menge der Carbonyl- bzw. Ketogruppen aufweisenden einpolymerisierten Comonomeren beträgt vorzugsweise 1 bis 5 Gew.-%, bezogen auf die Copolymerisate. Die wäßrigen Dispersionen der erfindungsgemäßen Copolymerisate können in an sich üblicher Weise durch Copolymerisation der Monomeren in wäßriger Emulsion unter Verwendung der üblichen Emulgier- und Dispergierhilfsmittel hergestellt sein und haben meist eine Konzentration an Copolymerisat von 40 bis 60 Gew.-%. Als Emulgier- und Dispergierhilfsmittel enthalten sie meist 0,2 bis 3 Gew.-%, bezogen auf die Menge des Copolymerisats, anionische und/oder nichtionische Emulgatoren, wie Natriumdialkylsulfosuccinate, Natriumsalze von Alkylsulfonsäuren, Natrium-, Kalium- und Ammoniumalkylsulfate, Alkalisalze von Sulfonsäuren, Alkalisalze von oxalkylierten $C_{12}$- bis $C_{24}$-Fettalkoholen und von oxalkylierten Alkylphenolen, sowie ferner oxethylierte Fettsäuren, Fettalkohole und/oder Fettamide, oxethylierte Alkylphenole, ferner Natriumsalze von Fettsäuren, wie Natriumstearat und Natriumoleat. Die Mengenverhältnisse der Monomeren - insbesondere aus den Gruppen (b) und (c) - sind innerhalb der oben angegebenen Grenzen so gewählt, daß die Polymerisate eine Glastemperatur von -40 bis +50 °C, vorzugsweise von -20 bis +30 °C haben. Die Glastemperatur wird nach üblichen Methoden, z.B. aus der Messung des E-Moduls im Kriechversuch als Funktion der Temperatur oder mit der Differentialthermoanalyse (DTA) bestimmt (s. dazu A. Zosel, Farbe und Lack 82 (1976), 125-134). Das mittlere Molekulargewicht der erfindungsgemäßen Copolymerisate, bestimmt mit der Ultrazentrifuge, liegt im bei filmbildenden

Polymeren üblichen Bereich, d.h. über 20 000, vorzugsweise über 50 000. Von besonderer anwendungstechnischer Bedeutung sind solche erfindungsgemäßen Copolymerisate, die eine mittleres Molekulargewicht über 100 000 haben. Die Teilchengrößen ihrer Dispersionen, bestimmt durch dynamische Lichtstreuung im Nanosizer der Firma Coulter Electronics, liegen im allgemeinen zwischen 50 und 500 nm, bei bevorzugten Dispersionen der erfindungsgemäßen Copolymerisate zwischen 80 und 280 nm.

Sofern die Polymerisate der Erfindung Epoxi- oder Carboxylgruppen aufweisende Monomere einpolymerisiert enthalten, können sie mit wasserlöslichen aliphatischen Dihydrazinverbindungen unter Vernetzung reagieren. Solche Dihydrazinverbindungen kann man den Dispersionen der Polymerisate unmittelbar zugeben, und zwar zweckmäßigerweise in einer Menge von 0,05 bis 1, vorzugsweise 0,4 bis 0,6 Mol je Mol der in den Polymerisaten enthaltenen Epoxi- oder Carbonylgruppen. Geeignete Dihydrazin-Verbindungen sind vor allem Dihydrazide aliphatischer 2 bis 10, insbesondere 4 bis 6 C-Atome enthaltender Dicarbonsäuren, wie Oxalsäuredihydrazid, Malonsäuredihydrazid, Bernsteinsäuredihydrazid, Glutarsäuredihydrazid, Adipinsäuredihydrazid, Sebazinsäuredihydrazid, Maleinsäuredihydrazid, Fumarsäuredihydrazid und/oder Itaconsäuredihydrazid. Geeignet sind ferner wasserlösliche aliphatische, 2 bis 4 C-Atome aufweisender Dihydrazine, wie Ethylen-1,2-dihydrazin, Propylen-1,3-dihydrazin und Butylen-1,4-dihydrazin.

Dabei hat es sich besonders bewährt, den Dispersionen der erfindungsgemäßen Copolymerisate außer den Dihydrazin-Verbindungen in an sich bekannter Weise wasserlösliche Schwermetallsalze in einer Menge von 0,0002 bis 0,02, insbesondere 0,002 bis 0,01 Mol je Mol Dihydrazinverbindung zuzusetzen. Die Schwermetallsalze können z.B. solche von Mangan, Kobalt, Nickel, Eisen, Kupfer, Chrom, Blei oder Vanadin sein. Vor allem kommen die Acetate, Sulfate, Nitrate und Nitrite in Betracht. Die Chloride können zwar auch eingesetzt werden, gelegentlich weisen sie aber unerwünschte Nebenwirkungen auf.

Die wäßrigen Dispersionen der erfindungsgemäßen Polymerisate eignen sich hervorragend als biozide Bindemittel für Holzschutzlasuren, Dispersionsfarben und kunstharzgebundene Putze. Sie sind in gegebenenfalls mit Wasser verdünnter, unpigmentierter Form z.B. als Grundierungen geeignet. Für die Herstellung von pigmentierten Anstrichmitteln können die üblichen Pigmente und Pigmentzubereitungen in den üblichen Mengen eingesetzt werden. Geeignet sind vor allem Titandioxid (Rutil), ferner Bleiweiß, Lithopone, sowie Farbpigmentzubereitungen. Als Füllstoffe für die Anstrichmittel können z.B. Kreide, Calcit, Talkum und feiner Sand in den üblichen Mengen eingesetzt werden. Außerdem können für die Anstrichmittel meist noch ionische und/oder nichtionische Dispergiermittel, z.B. niedermolekulare Polyacrylsäuren oder ethoxyliertes p-Nonylphenol, Verdickungsmittel, wie Celluloseether, Polyurethanverdicker, Styrol-Maleinsäure-Copolymerisate und/oder Polyvinylpyrrolidon, Filmbildehilfsmittel, wie Glykolether, Glykoletheracetate, Pineoil oder bei Raumtemperatur flüssige Alkohole mit 8 bis 15 C-Atomen und 1 bis 3 OH-Gruppen und/oder Verlaufshilfsmittel, wie Alkylpolyethylenglykoletherbisurethane eingesetzt werden. Gegebenenfalls kann man auch Konservierungsmittel, wie Chloracetamid oder chlorierte Phenole mitverwenden, obwohl das in der Regel nicht erforderlich sein wird.

Die erfindungsgemäßen Polymerisate sind auch als Bindemittel für kunstharzgebundene Putze und Buntsteinputze geeignet und können hierfür in den üblichen Mengen eingesetzt werden. Die Putze enthalten im allgemeinen 5 bis 12 % Bindemittel (fest) auf Basis von Copolymerisaten, deren minimale Filmbildetemperatur (= MFT) üblicherweise zwischen 5 und 30 °C liegt, und neben den mineralischen Bestandteilen, wie Pigmenten (z.B. Titanweiß), Füllstoffen (z.B. Kreise, Talkum u.a.) und Granulaten auf Basis von Calciumcarbonat und/oder Siliciumdioxid, die je nach Putzart und -struktur Korngrößen von etwa 0,5 bis 4 mm aufweisen, zusätzlich Verdickungsmittel, wie Celluloseether, Salze hochmolekularer Polyacrylsäuren, und/oder Polyvinylpyrrolidon, sowie Filmbildehilfsmittel, die eine Filmbildetemperatur von ≦ 5° ermöglichen. Als Filmbildehilfsmittel werden Ester höherer Fett säuren, z.B. Adipinsäurediisopropylester, sowie aromatenhaltige Benzine, Glykolether, Glykoletheracetate und Gemische derselben verwendet. Buntsteinputze enthalten als mineralische Bestandteile nur Granulate, aber keine Füllstoffe.

Die Dispersionen der erfindungsgemäßen Polymerisate haben eine so gute biozide Wirksamkeit, daß sie selbst wie auch die aus ihnen hergestellten Anstrichstoffe eine hohe Lagerbeständigkeit ohne die Gefahr eines Befalls durch Mikroorganismen aufweisen. Es ist daher in aller Regel nicht erforderlich, sie mit zusätzlichen Konservierungsmitteln zu versetzen. Das zeigt der am Ende der Beispiele wiedergegebene Topfkonservierungstest.

Die in den folgenden Beispielen verwendeten Abkürzungen haben folgende Bedeutung:

T = Teile, VE-Wasser = vollentsalztes Wasser; MMA = Methylmethacrylat; nBA = n-Butylacrylat; AM = Acrylamid; MAM = Methacrylamid; AS = Acrylsäure; S = Styrol; iBA = Isobutylacrylat; GMA = Glycidylmethacrylat; nBMA = n-Butylmethacrylat. Teile und Prozente beziehen sich auf das Gewicht.

Beispiel 1

In einem Witt-schen Topf mit Thermostat, Ankerrührer, Rückflußkühler, diversen Zulaufgefäßen, Thermometer und Stickstoffeinleitung werden vorgelegt:

| | |
|---|---|
| 350 | T VE-Waser |
| 4,5 | T einer 35 %igen wäßrigen Lösung des Na-Salzes eines sauren Schwefelsäureesters eines Addukts aus 1 Mol Nonylphenol und 25 Mol Ethylenoxid |

Die Vorlage wird mit Stickstoff gespült und auf 90° C aufgeheizt. Dann gibt man 6 Teile einer wäßrigen Lösung von 2,5 T Na-peroxidisulfat in 60 T VE-Wasser zu und fährt dann den Rest dieser Lösung als Zulauf I in 3,5 Stunden gleichmäßig dem Reaktor zu. Gleichzeitig beginnt man mit dem Zulauf II, der aus einer Emulsion aus

| | |
|---|---|
| 168 | T VE-Wasser |
| 22 | T der oben genannten Emulgatorlösung |
| 294 | T MMA |
| 284 | T nBA |
| 31 | T Tri-n-butyl-zinnmethacrylat |
| 9 | T AM |
| 6 | T AS |

besteht, die dem Reaktor gleichmäßig in 3 Stunden zugefahren wird. Man polymerisiert noch 1,5 Stunden bei gleicher Temperatur nach, kühlt die Dispersion ab und stellt den pH-Wert mit Ammoniakwasser auf 8-10. Man erhält eine schwach gelb gefärbte mittelviskose Dispersion mit einem Feststoffgehalt von ca. 49 Gew.-% und einer mittleren Teilchengröße (gemessen im Nanosizer) von ca. 150 nm, die beim Aufstreichen auf Glas und Trocknen einen klaren glänzenden Film ergibt. Sie enthält, bezogen auf trockenes Polymerisat, 1,5 % Zinn.

Beispiel 2

Man verfährt wie in Beispiel 1 angegeben, nur verwendet man in Zulauf II

| | |
|---|---|
| 288 | T S |
| 280 | T nBA |
| 31 | T Tri-n-butyl-zinnmethacrylat |
| 9 | T AM |
| 9 | T AS |

als Monomere. Man erhält eine schwach gelblich gefärbte mittelviskose Dispersion mit einem Feststoffgehalt von ca. 48 Gew.-% und einer mittleren Teilchengröße (Nanosizer) von ca. 130 nm. Sie enthält, bezogen auf trockenes Polymerisat, 1,6 % Zinn.

Beispiel 3

Man verfährt wie in Beispiel 1 angegeben, verwendet jedoch in Zulauf II eine Mischung von

| | |
|---|---|
| 304 | T MMA |
| 294 | T nBA |
| 12,5 | T Tri-n-butyl-zinn-methacrylat |
| 7 | T MAM |
| 6 | T AS. |

Man erhält eine fast farblose Dispersion mit einem Feststoffgehalt von ca. 50 Gew.-% und einer mittleren Teilchengröße (Nanosizer) von ca. 160 nm. Sie enthält, bezogen auf trockenes Polymerisat, 0,6 % Zinn.

Beispiel 4

Man verfährt wie in Beispiel 1 angegeben, verwendet jedoch in Zulauf II eine Mischung von

| | |
|---|---|
| 165 | T S |
| 145 | T MMA |
| 292 | T nBA |
| 12,5 | T Tri-n-butyl-zinn-methacrylat |
| 2,5 | T AM |
| 4 | T MAS |

Man erhält eine fast farblose Dispersion mit einem Feststoffgehalt von ca. 48 Gew.-% und einer mittleren Teilchengröße (Nanosizer) von ca. 120 nm. Sie enthält, bezogen auf trockenes Polymerisat, 0,6 % Zinn.

Beispiel 5

Man verfährt wie in Beispiel 4 angegeben, verwendet jedoch 12,5 Teile Diallyl-di-n-butyl-zinn anstelle des Tri-n-butylzinn-methacrylats.

Man erhält eine fast farblose Dispersion mit einem Feststoffgehalt von ca. 50 Gew.-% und einer mittleren Teilchengröße (Nanosizer) von ca. 180 nm. Sie enthält, bezogen auf trockenes Polymerisat, 0,76 % Zinn.

Beispiel 6

Man verfährt wie in Beispiel 4 angegeben, verwendet jedoch anstelle von Tri-n-butyl-zinn-methacrylat 12,5 Teile Di-n-butyl-zinn-dimethacrylat und gibt diese in das letzte Drittel des Zulaufs II.

Man erhält eine fast farblose Dispersion mit einem Feststoffgehalt von ca. 50 Gew.-% und einer mittleren Teilchengröße (Nanosizer) von ca. 140 nm. Sie enthält, bezogen auf trockenes Polymerisat, 0,59 % Zinn.

Beispiel 7

Man verwendet eine Apparatur wie in Beispiel 1 angegeben jedoch mit einem weiteren Zulaufgefäß. Vorgelegt wird eine Mischung aus

| | |
|---|---|
| 700 | T VE-Wasser |
| 1,5 | T einer frisch bereiteten 1 %igen Eisen-II-sulfat-lösung |

Als Zulauf I dient eine Lösung aus

| | |
|---|---|
| 11,5 | T Kaliumperoxidisulfat in |
| 365 | T VE-Wasser |

Der Zulauf II besteht aus

| | |
|---|---|
| 365 | T VE-Wasser |
| 25 | T der 35 %igen Lösung des Emulgators aus Beispiel 1 |
| 15 | T einer 40 %igen Lösung des Na-Salzes eines C14-C18-Alkylsulfonats |
| 650 | T MMA |
| 750 | T iBA |
| 75 | T Diacetonacrylamid |
| 30 | T Tri-n-butyl-zinn-methacrylat |

Der Zulauf III setzt sich zusammen aus

| | |
|---|---|
| 100 | T VE-Wasser |
| 15 | T der Lsg. des Emulgators aus Beispiel 1 |
| 7,5 | T der Lsg. des oben genannten Alkylsulfonats |
| 2 | T Natriumsulfoxylat |

Die mit N2 gespülte Vorlage wird auf 40°C aufgeheizt, je 5 Gew.-% der Zuläufe I und II zugegeben und die Emulsionspolymerisation durch Zugabe von 5 % des Zulaufs III in einem Guß gestartet. Nach 15 Minuten beginnt man dann die Zuläufe I, II und III gleichmäßig in 2 1/2, 2 und 3 Stunden zuzufahren, wobei die Innentemperatur bei ca. 50°C gehalten wird. Danach heizt man für ca. 1 Stunde auf 85°C auf, kühlt dann auf Raumtemperatur ab, stellt mit Ammoniakwasser auf pH 7-8 und rührt noch 30 T Adipinsäuredihydrazid in die Dispersion ein.

Man erhält eine fast farblose Dispersion mit einem mittleren Teilchendurchmesser (Nanosizer) von ca. 190 nm und einem Feststoffgehalt von ca. 46 Gew.-%. Sie enthält, bezogen auf trockenes Polymerisat, 0,6 % Zinn.

Beispiel 8

Man verwendet eine Apparatur wie in Beispiel 1 angegeben verwendet jedoch als Vorlage

| | |
|---|---|
| 1020 | T VE-Wasser, |

als Zulauf I

| | |
|---|---|
| 500 | T VE-Wasser |
| 72 | T der Lösung des Emulgators aus Beispiel 1 |
| 975 | T nBA |
| 225 | T GMA |
| 225 | T nBMA |
| 75 | T Diacetonacrylamid |
| 50 | T Tri-n-butyl-zinn-methacrylat |

und als Zulauf II eine Lsg aus

| | |
|---|---|
| 7,5 | T Natriumperoxiddisulfat in |
| 250 | T VE-Wasser |

Die mit N2 gespülte Vorlage wird auf 85°C aufgeheizt. Dann werden je 3 % der Zuläufe I und II zugegeben. Nach weiteren 15 Minuten beginnt man die Zuläufe I und II gleichmäßig nebeneinander in 2 Stunden dem Reaktor zuzufahren. Man polymerisiert noch 1 Stunde nach, kühlt dann auf Raumtemperatur ab und rührt noch 45 T Adipinsäuredihydrazid in die Dispersion ein.

Man erhält eine fast farblose Dispersion mit einem Feststoffgehalt von ca. 46 %, einem pH-Wert von ca. 4 und einer mittleren Teilchengröße (Nanosizer) von ca. 390 nm. Sie enthält, bezogen auf trockenes

Polymerisat, 1 % Zinn.

Beispiel 9

Man verfährt wie im Beispiel 1 angegeben, verwendet jedoch im Zulauf II anstelle von 31 T nur 12 T Tri-n-butyl-zinn-methacrylat. Man erhält eine Dispersion, die der des Beispiels 1 entspricht mit dem Unterschied, daß sie, bezogen auf trockenes Polymerisat, nur 0,6 % Zinn enthält.

Beispiel 10

Man verfährt wie im Beispiel 2 angegeben, setzt jedoch statt 31 T nur 12 T Tri-n-butyl-zinnmethacrylat im Zulauf II ein. Die erhaltene Dispersion entspricht der des Beispiels 2 mit dem Unterschied, daß sie, bezogen auf trockenes Polymerisat, nur 0,6 % Zinn enthält.

Beispiel 11

Aus der Polymerisatdispersion gemäß Beispiel 9 und aus einer zinnfreien Polymerisatdispersion, die nach der Vorschrift des Beispiels 1 unter Fortlassung des Tri-n-butylzinn-methacrylats hergestellt worden war, wurde je eine Holzschutzlasur nach folgender Rezeptur hergestellt:

| | A erfindungsgemäß | B Vergleich |
|---|---|---|
| Wasser | 100 T | 100 T |
| Ammonium-polyacrylat 30 % in Wasser | 2 T | 2 T |
| Propylenglykol | 50 T | 50 T |
| Mattierungsmittel ($SiO_2$) | 17 T | 17 T |
| Fungizid-Algizid [1)] | - | 15 T |
| transparenter wäßriger Eisenoxid-Teig | 70 T | 70 T |
| Polymerisatdispersion nach Beispiel 9 | 720 T | - |
| Polymerisatdispersion, zinnfrei | - | 720 T |
| Butylglykol | 24 T | 24 T |
| Entschäumer auf Mineralölbasis | 2 T | 2 T |

[1)] handelsübliches Produkt zur fungiziden und algiziden Ausrüstung von Holzanstrichmitteln, das vom Hersteller als fischtoxisch bezeichnet wird.

Die beiden Holzschutzlasuren wurden in einer Menge von 150 g/m² auf Kieferbretter aufgetragen und die Bretter 1 1/2 Jahre lang in 45°-Lage im Freien der Witterung ausgesetzt. Nach dieser Zeit war die mit der Lasur A behandelte Probe, die keine fischtoxischen Bestandteile enthielt, ebenso frei von Algen- und Pilzbefall wie die Vergleichsprobe gemäß dem Stand der Technik.

Beispiele 12 und 13

Aus den Polymerisatdispersionen gemäß den Beispielen 9 und 10 sowie aus zinnfreien Polymerisatdispersionen, die nach den Vorschriften der Beispiele 1 und 2 unter Fortlassung des Tri-n-butyl-zinn-methacrylats hergestellt worden waren, wurden nach folgenden Rezepturen Fassadenfarben hergestellt. Die Rezepturen der Beispiele 12 und 13 enthalten je eine erfindungsgemäße Polymerisatdispersion, diejenigen, der Vergleichsbeispiele 12a und b und 13a und b je eine entsprechende, aber zinnfreie Polymerisatdispersion, wobei die mit a bezeichneten Vergleichs-Beispiele Fungizid-Algizid-freie Zubereitungen, die mit b bezeichneten solche Zubereitungen betreffen, denen ein handelsübliches Fungizid und Algizid zugesetzt ist.

Die Fassadenfarben wurden in einer Menge von 300 g/m² auf Kieferbretter aufgetragen und ein Jahr lang im Freien der Witterung ausgesetzt. Nach dieser Zeit war die beschichtete Vorderseite bei allen Proben ohne Bewuchs; auf der Rückseite konnten die am Ende der Tabelle angegebenen Unterschiede im Bewuchs festgestellt werden.

| Beispiele | 12 | 12a | 12b | 13 | 13a | 13b |
|---|---|---|---|---|---|---|
| Wasser | 77 | 77 | 77 | 77 | 77 | 77 |
| Ammoniumpolyacrylat, 30 % in Wasser | 2 | 2 | 2 | 2 | 2 | 2 |
| Natriumpolyphosphat, 10 % in Wasser | 10 | 10 | 10 | 10 | 10 | 10 |
| Ammoniak Konz. | 2 | 2 | 2 | 2 | 2 | 2 |
| handelsübl. Fungizid u. Algizid | - | - | 7,4 | - | - | 7,4 |
| Testbenzin 180/220 °C | 12 | 12 | 12 | 12 | 12 | 12 |
| Gemisch von Glutar-, Adipin- und bernsteinsäurebutylester | 12 | 12 | 12 | 12 | 12 | 12 |
| Hydroxiethylcellulose, 2 % in Wasser | 110 | 110 | 110 | 110 | 110 | 110 |
| Polyurethanverdicker, 5 % | 5 | 5 | 5 | 5 | 5 | 5 |
| Titanweiß | 150 | 150 | 150 | 150 | 150 | 150 |
| Kreide | 180 | 180 | 180 | 180 | 180 | 180 |
| Talkum | 60 | 60 | 60 | 60 | 60 | 60 |
| Entschäumer auf Silikonbasis | 2 | 2 | 2 | 2 | 2 | 2 |
| Polymerisatdispersion gem. Bsp. 9 | 375 | - | - | - | - | - |
| dto. gem. Bsp. 1, aber zinnfrei | - | 375 | 375 | - | - | - |
| Polymerisatdispersion gem. Bsp. 10 | - | - | - | 375 | - | - |
| dto. gem. Bsp. 2, aber zinnfrei | - | - | - | - | 375 | 375 |
| Bewuchs auf der Rückseite nach 1 Jahr Freibewitterung | wenig | stark | mäßig | keiner | mäßig | wenig |

Beispiele 14 und 15

Aus den Polymerisatdispersionen gemäß den Beispielen 9 und 10 sowie aus zinnfreien Polymerisatdispersionen, die nach den Vorschriften der Beispiele 1 und 2 unter Fortlassung des Tri-n-butyl-zinnmethacrylats hergestellt worden waren, wurden nach folgenden Rezepturen kunstharzgebunde Putze hergestellt. Die Rezepturen der Beispiele 14 und 15 enthalten je eine erfindungsgemäße Polymerisatdispersion, diejenigen der Vergleichsbeispiele 14a und 15a je eine entsprechende, aber zinnfreie Polymerisatdispersion, dafür aber ein handelsübliches Fungizid und Algizid.

Die Putze wurden in einer Menge von 3000 g/m² auf Faserzementplatten aufgetragen und ein Jahr lang in 45°-Lage im Freien der Witterung ausgesetzt. Nach dieser Zeit waren alle Putzoberflächen frei von Bewuchs.

| | Beispiel | | | |
|---|---|---|---|---|
| | 14 | 14a | 15 | 15a |
| Polymerisatdispersion nach Beispiel 9 | 170 | - | - | - |
| dto. gem. Beispiel 1, aber zinnfrei | - | 170 | - | - |
| Polymerisatdispersion nach Beispiel 10 | - | - | 170 | - |
| dto. gem. Beispiel 2, aber zinnfrei | - | - | - | 170 |
| Hydroxiethylcellulose, 3 % in Wasser | 21 | 21 | 21 | 21 |
| Trikaliumphosphat, 50 % in Wasser | 5 | 5 | 5 | 5 |
| Polyethylenwachsdispersion, 65 % in Wasser | 3 | 3 | 3 | 3 |
| Entschäumer auf Silikonbasis | 4 | 4 | 4 | 4 |
| handelsübliches Fungizid u. Algizid | - | 3,4 | - | 3,4 |
| Testbenzin 180/220 °C | 20 | 20 | 20 | 20 |
| Dibutyladipat | 20 | 20 | 20 | 20 |
| Titanweiß | 32 | 32 | 32 | 32 |
| Kreide | 344 | 344 | 344 | 344 |
| Aluminiumsilikat | 79 | 79 | 79 | 79 |
| Calciumcarbonat-Granulat 1,5 mm | 300 | 300 | 300 | 300 |

Topfkonservierungstest

Die in den Beispielen 11A, 11B, 12, 12b, 13, 13b, 14, 14a, 15 und 15a beschriebenen Anstrichstoffe wurden wie folgt auf ihre Lagerbeständigkeit geprüft:

Die Anstrichstoffe wurden mit einem Gemisch folgender Bakterien, Hefen und Schimmelpilze geimpft:

| | | |
|---|---|---|
| Beimpfung: | Pseudo. aeruginosa<br>Citrobac. freundii<br>Proteus vulgaris<br>E. coli<br>Klebsiella pneum.<br>Pichia bispora<br>Candida Lipolytika | candida boidinii<br>Geotrichum candidum<br><br>Aspergillus niger<br>Pen. funiculosum |

Die beimpften Ansätze wurden dann bei 30 °C in geschlossenen Gefäßen gelagert. Nach 7- und 21-tägiger Lagerung wurden Proben entnommen und auf Nährmedium übertragen, um andhand der Mikroorganismenentwicklung die Anfälligkeit der Anstrichstoffe zu beurteilen.

Ergebnis: Die die erfindungsgemäßen Polymerisate enthaltenden Anstrichstoffe zeigten ebenso wie die Fungizid und Algizid enthaltenden Ansätze gemäß dem Stand der Technik keinen Mikroorganismenbefall, obwohl sie frei von Konservierungsstoffen waren.

## Ansprüche

1. Zinnhaltige Polymerisate von ethylenisch ungesättigten Monomeren in Form wäßriger Dispersionen, dadurch gekennzeichnet, daß sie, bezogen auf trockenes Polymerisat,

(a) 0,03 bis 2 Gew.-% Zinn in Form von Einheiten von Organozinnverbindungen mit mindestens einer polymerisierbaren C=C-Bindung,

(b) 10 bis 80 Gew.-% Einheiten hartmachender Monomerer,

(c) 90 bis 20 Gew.-% Einheiten weichmachender Monomerer,

(d) 0 bis 7 Gew.-% Einheiten von Acrylsäure, Methacrylsäure, Vinylsulfonsäure, Maleinsäure, Acrylamid, Methacrylamid oder am N durch $C_1$- bis $C_8$-Alkyl, Hydroximethyl oder $C_1$- bis $C_8$-Alkoximethyl substituiertem Acryl- oder Methacrylamid und

(e) 0 bis 5 Gew.-% anderer Monomerer, die weder hydrophilierend noch leicht hydrolysierbar sind, einpolymerisiert enthalten und daß sie eine Glastemperatur von -40 bis +50 °C haben.

2. Polymerisate gemäß Anspruch 1, gekennzeichnet durch einen Gehalt, bezogen auf wasserfreies Polymerisat, von 0,3 bis 1 Gew.-% an Zinn.

3. Polymerisate gemäß Anspruch 1 oder 2, gekennzeichnet durch eine Glastemperatur von -20 bis +30 °C.

4. Polymerisate gemäß einem der Ansprüche 1 bis 3, dadurch gekennzeichnet, daß sie das Zinn in Form von Einheiten der Formel

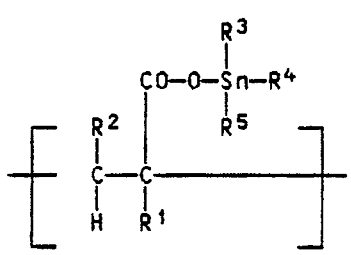

enthalten, in der

$R^1$ Wasserstoff oder eine Gruppe der Formel $-CH_2-X$,

$R^2$ eine Gruppe der Formel -X,

X beide Wasserstoff oder ein X Wasserstoff, das andere eine Gruppe der Formel -CO-O-A,

A Wasserstoff, eine $C_1$- bis $C_8$-Alkylgruppe oder eine Gruppe der Formel

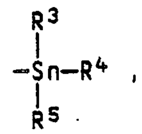

$R^3$ und $R^4$ gleiche oder verschiedene $C_1$- bis $C_8$-Alkylgruppen, Cycloalkylgruppen oder Phenylgruppen und

$R^5$ eine Gruppe der bei $R^3$ und $R^4$ genannten Art oder eine Gruppe der Formel

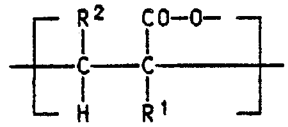

bedeuten.

5. Polymerisate gemäß einem der Ansprüche 1 bis 4, dadurch gekennzeichnet, daß sie das Zinn in Form von Einheiten des Tri-n-butylzinnacrylats oder -methacrylats enthalten.

6. Polymerisate gemäß einem der Ansprüche 1 bis 4, dadurch gekennzeichnet, daß sie das Zinn in Form von Einheiten des Di-n-butylzinn-diacrylats oder -dimethacrylats enthalten.

7. Polymerisate gemäß einem der Ansprüche 1 bis 3, dadurch gekennzeichnet, daß sie das Zinn in Form von Einheiten der Formel

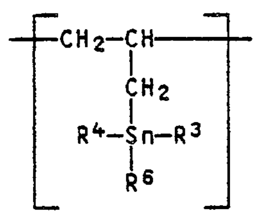

enthalten, in der

$R^3$ und $R^4$ gleiche oder verschiedene $C_1$- bis $C_8$-Alkylgruppen, Cycloalkylgruppen oder Phenylgruppen und

$R^6$ eine Gruppe der bei $R^3$ und $R^4$ genannten Art oder eine Gruppe der Formel

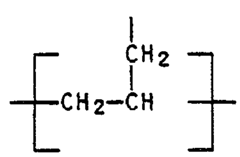

bedeuten.

8. Polymerisate nach Anspruch 1, 2, 3 oder 7, dadurch gekennzeichnet, daß sie das Zinn in Form von Einheiten des Diallyl-di-n-butylzinns oder des Diallyl-dicyclohexylzinns enthalten.

9. Polymerisate gemäß einem der Ansprüche 1 bis 8, dadurch gekennzeichnet, daß sie Carbonylgruppen aufweisende Monomere einpolymerisiert enthalten.

10. Polymerisate gemäß Anspruch 9, dadurch gekennzeichnet, daß sie in einer wäßrigen Dispersion vorliegen, die Dihydrazinverbindungen in einer Menge von 0,05 bis 1 Mol je Mol Carbonylgruppen enthält.

11. Polymerisate gemäß Anspruch 10, dadurch gekennzeichnet, daß sie in einer wäßrigen Dispersion vorliegen, die wasserlösliche Schwermetallsalze in einer Menge von 0,0002 bis 0,02 Mol je Mol Dihydrazinverbindung enthält.

12. Verwendung von Polymerisaten gemäß einem der Ansprüche 1 bis 11 als biozide Bindemittel für Holzschutzlasuren, Dispersionsfarben und kunstharzgebundene Putze.